# EUROPÄISCHE PATENTANMELDUNG

(11) **EP 1 164 109 A1**
(43) Veröffentlichungstag der Anmeldung: **19.12.2001**
(21) Anmeldenummer: 00112623.4
(22) Anmeldetag: 14.06.2000
(51) Int. Cl.: C02F 1/00, C02F 1/44

(54) **Vorrichtung zur Erzeugung von als Trinkwasser geeignetem Brauchwasser**

(71) Anmelder: Rochem Ultrafiltrations Systeme Gesellschaft für Abwasserreinigung mbH, 20355 Hamburg (DE)
(72) Erfinder: Heine, Wilhelm, 21077 Hamburg (DE); Günther, Ralph, Dr., 21244 Buchholz (DE)
(74) Vertreter: Niedmers, Ole, Dipl.-Phys.

(57) **Zusammenfassung**

Es wird eine Vorrichtung (10) zur Erzeugung von als Trinkwasser geeignetem Brauchwasser aus Rohwasser (11) mittels wenigstens einer Membrantrenneinrichtung (12) vorgeschlagen, wobei das Rohwasser (11) auf den Eingang (13) der Membrantrenneinrichtung (12) gegeben wird und wobei das Brauchwasser die Membrantrenneinrichtung (12) als Permeat (19) verläßt. Dabei wird die Membrantrenneinrichtung (12) nach dem Prinzip der Ultrafiltration betrieben und die für den Aufbau der Druckdifferenz zwischen Feed- bzw. Retentatseiten (21) und Permeatseite (22) der Membrantrenneinrichtung (12) benötigte Energie wird durch eine Photovoltaikeinrichtung (23) geliefert.

## Beschreibung

Die Erfindung betrifft eine Vorrichtung zur Erzeugung von als Trinkwasser geeignetem Brauchwasser aus Rohwasser mittels wenigstens einer Membrantrenneinrichtung, wobei das Rohwasser auf den Eingang der Membrantrenneinrichtung gegeben wird und wobei das Brauchwasser die Membrantrenneinrichtung als Permeat verläßt.

Vorrichtungen dieser Art sind in den vielfältigsten Ausgestaltungen bekannt und werden in dieser verhältnismäßig einfachen aber dennoch sehr wirksamen Form zur Erzeugung von Trinkwasser aus mehr oder weniger stark salzhaltigem Meerwasser verwendet. Zur Meer- bzw. Brackwasserentsalzung wurden bisher ausschließlich Membraneinrichtungen verwendet, die nach dem Prinzip der Umkehrosmose oder der Elektrodialysation betrieben werden, wobei allerdings Umkehrosmoseanlagen bisher überwogen bzw. nach wie vor überwiegen, denn diese haben eine geringere Energieaufnahme und sind wirtschaftlicher zu betreiben als Elektrodialysieranlagen.

Ein weiteres Problem bei der Erzeugung von Trinkwasser oder Brauchwasser schlechthin aus verunreinigtem Wasser ist, daß vielfach am Ort der beabsichtigten Wasseraufbereitung keine ausreichenden Energiequellen zur Verfügung stehen, beispielsweise kein Spannungsversorgungsnetz, und auch mit Verbrennungsmotoren angetriebene Spannungsversorgungseinrichtungen nicht zur Verfügung stehen, beispielsweise in ländlichen Gebieten, in Wüsten und Halbwüstenregionen. Das in diesen Regionen beispielsweise zur Versorgung der dort lebenden Menschen mit Trinkwasser vorhandene Rohwasser, daß vielfach in Brunnen gesammeltes Oberflächenwasser ist, ist in den allermeisten Fällen mit gesundheitsgefährdenden Keimen belastet, wobei gesundheitsgefährdende Keime nicht nur Bakterien, sondern auch Viren sind, die mit den bisher bekannten Methoden zur Erzeugung von Trinkwasser aus Rohwasser nicht herausgefiltert bzw. zurückgehalten werden konnten.

Das Problem ist nun, zusammengefaßt, ein doppeltes Problem: bei den bisherigen Methoden zur Erzeugung von Trinkwasser aus Rohwasser, nämlich einerseits die Unfähigkeit bisheriger Membrantrenneinrichtungen nicht nur Bakterien aus dem Rohwasser abtrennen zu können, sondern auch Viren, und eine ausreichend leistungsfähige elektrische Energiequelle am Ort der Wasseraufbereitung zur Verfügung zu haben, wenn dieser Ort in abgelegenen Gebieten wie ländlichen Bereichen, Halbwüsten oder Wüsten vonstatten gehen soll. Ein untergeordnetes aber nicht zu unterschätzendes Problem im Zusammenhang mit der zweiten vorgenannten Problemkomponente ist noch das, daß nämlich bisherige Vorrichtungen zur Erzeugung von Trinkwasser aus Rohwasser verhältnismäßig große Energiemengen benötigten, so daß an den vorgenannten beabsichtigten Einsatzorten ein Energiebedarf für diese Zwecke bestand bzw. besteht, der bisher nicht erfüllt werden konnte.

Es ist somit Aufgabe der vorliegenden Erfindung, eine Vorrichtung der eingangs genannten Art zu schaffen, mit der auf hochwirksame Weise nicht nur Bakterien, sondern auch Viren und andere Trübstoffe aus dem Rohwasser abgetrennt werden können, so daß das mit der Vorrichtung erzeugte Brauchwasser als Trinkwasser geeignet ist und dennoch ein aufgrund des beabsichtigten Einsatzes der Vorrichtung in abgelegenen Gebieten, in denen ein elektrisches Spannungsnetz nicht bereitgestellt werden kann, dennoch ein effektiver Betrieb der Vorrichtung möglich sein soll, wobei die Vorrichtung einfach und kostengünstig aufbaubar, bereitstellbar und betreibbar sein soll und ein weitgehend wartungsloser Betrieb der Vorrichtung gewährleistet sein soll.

Gelöst wird die Aufgabe gemäß der Erfindung dadurch, daß die Membrantrenneinrichtung nach dem Prinzip der Ultrafiltration betrieben wird und die für den Aufbau der Druckdifferenz zwischen Feed- bzw. Retentatseite und Permeatseite der Membrantrenneinrichtung benötigte Energie durch eine Photovoltaikeinrichtung geliefert wird.

Der Vorteil der erfindungsgemäßen Vorrichtung besteht im wesentlichen darin, daß einerseits eine nach dem Prinzip der Ultrafiltration betriebene Membraneinrichtung in der Lage ist, nicht nur Bakterien, sondern auch Viren und Trübstoffe abzutrennen, wobei Viren bzw. die die Trübstoffe bildenden Partikel eine Größe von ca. 23 nm haben, wobei Untersuchungen der erfindungsgemäßen Vorrichtung ergeben haben, daß in der Permeattrenneinrichtung der erfindungsgemäßen Vorrichtung keine Viren nachgewiesen werden konnten. Mikrofiltrationsmembranen, die zur Wasseraufbereitung bisher eingesetzt worden waren, konnten höchstens eine Verminderung von Bakterien und Viren um bis zu 99 % erreichen, was allerdings für eine Nutzung des damit erzeugten Brauchwassers für Trinkwasserzwecke ohne weitere Behandlung nicht ausreichend ist. Ein weiterer wesentlicher Vorteil der Vorrichtung besteht darin, daß das der Vorrichtung zur Erzeugung von Trinkwasser zugeführte Brauchwasser keiner weiteren Vorbehandlung bedarf, von korpuskularen Verunreinigungen wie Sand oder sonstigen Fraktionen in diesem Größenordnungsbereich abgesehen, die mit einer normalen Filtervortrennung entfernt werden können, d.h., daß keine weitere Filterung nötig ist. Der für den nötigen transmembranen Druck erforderliche Druck, d.h. für den Aufbau der Druckdifferenz zwischen Feed- bzw. Retentatseite und Permeatseite der Membrantrenneinrichtung, wird durch eine Druckerhöhungseinrichtung erzeugt, wobei die elektrische Energie von Solarzellen erzeugt wird. Da die erforderliche Druckdifferenz zum bestimmungsgemäßen Betrieb der Vorrichtung für die hier angegebenen Zwecke nicht sehr groß ist, ist auch die Energieaufnahme der Druckerhöhungseinrichtung verhältnismäßig gering, um den erfindungsgemäßen Betrieb aufrechtzuerhalten.

Gemäß einer vorteilhaften Ausgestaltung der Erfindung wird die Druckdifferenz durch Erhöhung des Feeddrucks mittels einer dem Feed- bzw. Rohwassereingang der Membrantrenneinrichtung vorgeschalteten Pumpe bewirkt, die eine Erhöhung des Drucks des Feeds bzw. Rohwasser bewirkt, das auf die Membrantrenneinrichtung gegeben wird. Grundsätzlich ist es natürlich auch möglich, zusätzlich oder alternativ zur feedseitig vorgesehenen Pumpe retentatseitig eine Saugpumpe vorzusehen und/oder auch retentatseitig eine Saugpumpe zu installieren.

Bei einer vorteilhaften Ausgestaltung der Vorrichtung ist der Permeatausgang der Permeattrenneinrichtung mit einem Behälter zur Aufnahme wenigstens eines Teils des erzeugten Permeats verbunden. Der Behälter kann in diesem Falle doppelte Funktionen haben. Einerseits dient der Behälter bei dieser Ausgestaltung der Bevorratung des mit der Vorrichtung erzeugten Brauchwassers bzw. Trinkwassers, das die Membrantrenneinrichtung als Permeat verläßt, und der Behälter kann andererseits auch dazu verwendet werden, in Nachtzeiten, in denen die Vorrichtung wegen des Fehlens von Sonnenlicht nicht arbeitet, Permeat- bzw. Reinwasser auf die Rohwasser-bzw. Feedseite der Membran der Membrantrenneinrichtung zu geben, um sicherzustellen, daß die zu Nachtzeiten nicht aktive Membran nicht der Luft ausgesetzt wird und auch das belastete Rohwasser nicht auf der Membran stehenbleibt, so daß sich auch das Rohwasser nicht absetzen kann und die Gefahr der Ausbildung eines Films aus im Rohwasser mitgeführten Bestandteilen verringert wird.

Um für den vorgeschilderten Vorgang nicht gesonderte Pumpeneinrichtungen vorsehen zu müssen, d.h die wiederum sowieso knappen Energieressourcen einer Photovoltaikeinrichtung nicht weiter zu belasten, selbst wenn dafür für den Nachtbetrieb eine aus Akkumulatoren betriebene Puffereinrichtung herangezogen werden könnte, d.h. auf zusätzliche Pumpeneinrichtungen verzichten zu können, die das Reinwasser vom Behälter auf die Feedseite der Membran führen würden, ist der Behälter der Vorrichtung vorteilhafterweise barometrisch höher als die Membrantrenneinrichtung angeordnet, so daß für den Transport des im Behälter gesammelten Reinwassers zur Membrantrenneinrichtung lediglich die Gravitation herangezogen wird. Dafür ist die Vorrichtung vorzugsweise derart gestaltet, daß der Behälter einen Ausgang aufweist, der mit dem Retentatausgang der Membrantrenneinrichtung verbunden ist. Immer dann, wenn gewünscht, wird Permeat, das das Reinwasser darstellt, nicht nur an die der Vorrichtung angeschlossenen Verbraucher, sondern auch in den Behälter gefördert, um so einen Vorrat für die Spülung der Membran bereitzustellen.

Vorteilhafterweise ist in die Verbindungsleitung zwischen Behälter und dem Retentatausgang der Membrantrenneinrichtung ein Ventil geschaltet, das geeignet gesteuert dafür sorgen kann, daß immer dann, wenn es gewünscht wird, beispielsweise in der Nacht, ein bestimmter Anteil des Reinwassers bzw. Retentats vom Behälter auf die Feed- bzw. Rohwasserseite der Membran gegeben werden kann.

Wenn es sich bei dem zu reinigendem Rohwasser um sehr stark verunreinigtes Rohwasser handelt, beispielsweise Rohwasser, das aus Brunnen oder Rohwassertümpeln gewonnen wird, und auch nicht ausgeschlossen werden kann, daß daraus auch Vieh trinkt, ist es vorteilhaft, der nach dem Prinzip der Ultrafiltration betriebenen Membrantrenneinrichtung eine in die Rohwasser- bzw. Feedzufuhrleitung geschaltete, nach dem Prinzip der Mikrofiltration betriebene zweite Membrantrenneinrichtung vorzusehen, d.h. diese kaskadenartig mit der ersten Membrantrenneinrichtung zu betreiben. Mittels der nach dem Prinzip der Mikrofiltration betriebenen Membrantrenneinrichtung könnten schon bis zu 99 % der Verunreinigungen in Form von Bakterien und Viren zurückgehalten werden, so daß die nach dem Prinzip der Ultrafiltration betriebene erste Membrantrenneinrichtung nur noch die End- bzw. Feinfilterung des Permeats vornehmen müßte, das die nach dem Prinzip der Mikrofiltration betriebene zweite, vorgeschaltete Membraneinrichtung verläßt.

Um zu verhindern, daß sich Trübstoffe auf der Membran der Membrantrenneinrichtung ebenfalls während des Betriebes nicht anreichern, wird wenigstens die nach dem Prinzip der Ultrafiltration betriebene Membrantrenneinrichtung nach Cross-Flow-Modus betrieben.

Wie schon erwähnt, wird die Druckdifferenz zwischen der Feed- bzw. Retentatseite und der Permeatseite der Membrantrenneinrichtung im wesentlichen durch die Druckerhöhungseinrichtung, d.h. ggf. durch eine Pumpeneinrichtung bestimmt, d.h. durch den Druck bzw. die Förderleistung der Pumpe, die von der Photovoltaikeinrichtung ihre elektrische Energie bezieht. Es ist aber auch vorteilhafterweise möglich, zusätzlich die Höhe der Druckdifferenz zwischen der Feed- und Retentatseite und der Permeatseite durch ein in einer Retentatabflußleitung angeordnetes Ventil steuer- und regelbar auszubilden, d.h. die Pumpe beispielsweise mit im wesentlichen konstanter Leistung zu betreiben und den Druck im Feed- bzw. Retentatkreislauf lediglich durch das Ventil zu steuern und zu regeln.

Auch kann vorzugsweise in der Permeatabflußleitung zwischen Membrantrenneinrichtung und Behälter ein Ventil angeordnet sein, mit dem, je nach Bedarf, das Permeat entweder in den Behälter geleitet wird oder aber aus dem Vorrichtungskreislauf herausgeführt wird, um an die daran angeschlossenen Verbraucher gefördert zu werden. Um dieses Wechselspiel geeignet zu steuern, ist es ebenfalls vorteilhaft, in der Permeatabflußleitung zwischen Membrantrenneinrichtung und einem Permeatauslaß ein Ventil anzuordnen, das mit dem Ventil zwischen Permeatabflußleitung und Behälter zusammen geeignet gesteuert werden kann, aber nicht muß, um beispielsweise auch geeignet gesteuert und geregelt sicherstellen zu können, daß in bestimmten Fällen, wie oben schon angedeutet, sowohl Permeat bzw. Reinwasser in den Behälter überführt wird, beispielsweise bis dieser gefüllt ist, und aus der Vorrichtung zu den Verbrauchern benötigte Mengen von Reinwasser bzw. Permeat abzuführen.

Gemäß einer weiteren vorteilhaften Ausgestaltung der Vorrichtung kann es ebenfalls nützlich sein, den Rohwasser- bzw. Feedeingang der Membrantrenneinrichtung über ein Ventil mit einem Rohwasser- bzw. Feedausgang zu verbinden, über den beispielsweise das vom Behälter an die Feed- bzw. Rohwasserseite der Membran geführte Spülwasser aus dem System der Vorrichtung herausgeführt werden kann.

Neben der Photovoltaikeinrichtung kann eine Steuer- und Regeleinrichtung vorgesehen sein, mit der faktisch der ganze Membrantrennprozeß einschließlich der Pumpe bzw. der Pumpen und einschließlich der Ventile steuer- und regelbar sind, wobei alle Ventile der Vorrichtung elektromotorisch bzw. elektromagnetisch betriebene Ventile sein können, die es dann ermöglichen, daß die gesamte Vorrichtung ohne manuellen Eingriff vollautomatisch betrieben werden kann. Die Steuer- und Regeleinrichtung kann mittels eines Rechners gesteuert sein, so daß auch durch diese Maßnahme das eingangs genannte Ziel, nämlich einen vollautomatischen Betrieb der Vorrichtung zu gewährleisten, ohne daß ein manueller Eingriff nötig ist, erreicht wird.

Dafür wird die von der Photovoltaikeinrichtung gelieferte elektrische Energie auch von der Steuer- und Regeleinheit zur Ausführung der Steuer- und Regelfunktionen genutzt. Die jetzigen zur Verfügung stehenden mikroelektronischen Bauteile werden dabei nach dem Prinzip der möglichst geringsten eigenen elektrischen Verlustleistung ausgewählt, um den wesentlichen Teil der von der Photovoltaikeinrichtung gelieferten elektrischen Energie zum Betrieb der elektromotorisch angetriebenen Druckerhöhungseinrichtung, beispielsweise in Form einer Pumpe, zur Erzeugung der Druckdifferenz zwischen Retentatseite und Permeatseite der Membran der Membrantrenneinrichtung zur Aufrechterhaltung des Trennvorganges nutzen zu können.

Die Erfindung wird nun unter Bezugnahme auf die nachfolgenden schematischen Zeichnungen anhand eines Ausführungsbeispieles eingehend beschrieben. Darin zeigen:

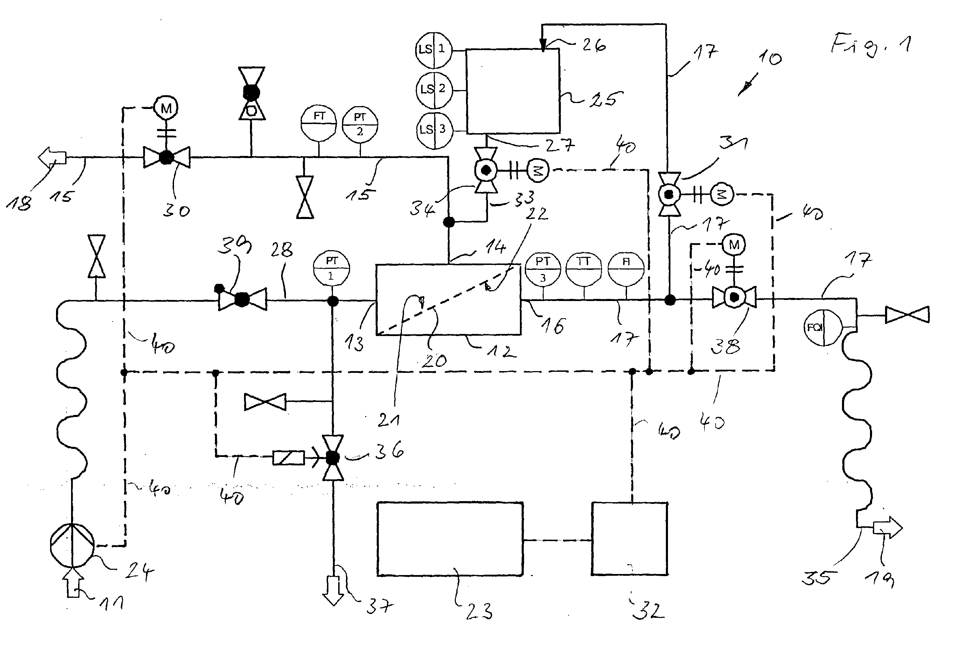

- Fig. 1: ein Blockschaltbild der Vorrichtung mit einer nach dem Prinzip der Ultrafiltration betriebenen Membrantrenneinrichtung, wobei die zu deren Betrieb nötige elektrische Energie durch eine Photovoltaikeinrichtung geliefert wird, und

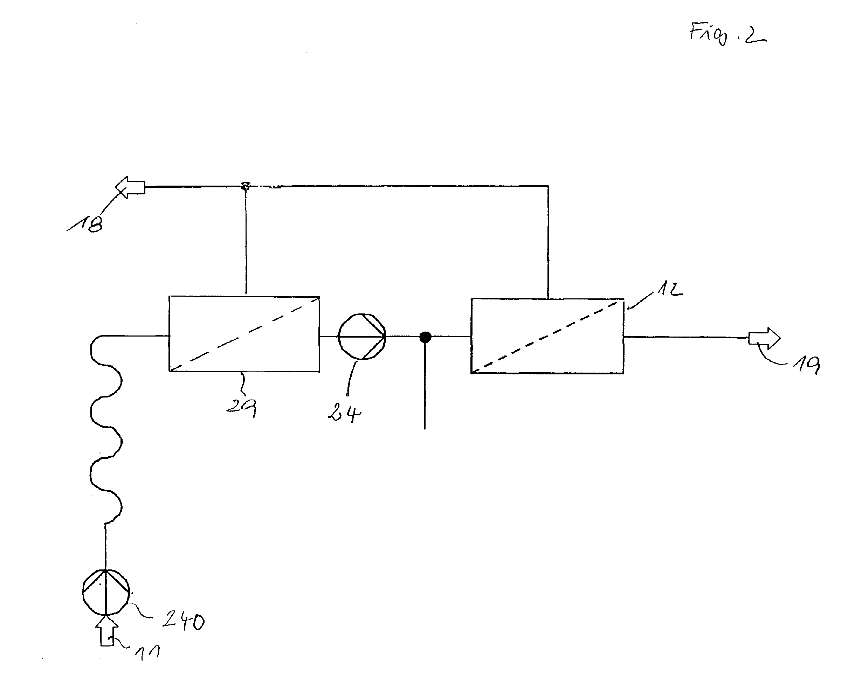

- Fig. 2: ein Blockschaltbild einer modifizierten Ausgestaltung der Vorrichtung gem. Fig. 1 in lediglich ausschnittsweiser Darstellung, bei der der nach dem Prinzip der Ultrafiltration betriebenen Membrantrenneinrichtung eine zweite Membrantrenneinrichtung vorgeschaltet ist, die nach dem Prinzip der Mikrofiltration betrieben wird, und zwar unter Weglassung für das Verständnis des zweistufigen Aufbaus der Vorrichtung nicht nötiger Vorrichtungselemente.

Zunächst wird Bezug genommen auf die Darstellung der Vorrichtung 10 gemäß Fig. 1, in der in Form eines Blockschaltbildes das Aufbauprinzip der Vorrichtung 10 dargestellt ist.

Der Kern der Vorrichtung 10 ist eine nach dem Prinzip der Ultrafiltration betriebene Membrantrenneinrichtung 12. Eine solche Membrantrenneinrichtung 12 weist einen an sich bekannten Aufbau auf, so daß darauf an dieser Stelle nicht weiter eingegangen zu werden braucht. Die Membrantrenneinrichtung 12 weist einen Rohwasser- bzw. Feedeingang 13, einen Retentatausgang 14 und einen Permeatausgang 16 auf. Die eigentliche Membran 20 trennt die Feed- bzw. Retentatseite der Membran 21 von der Permeatseite 22. Über eine Feedwasserzufuhrleitung 28 wird Rohwasser 11 auf eine Pumpe 24 gegeben, die elektromotorisch angetrieben wird. Von dort gelangt das druckerhöhte Rohwasser 11 auf den Rohwasser- bzw. Feedeingang 13. In die Feedwasserzufuhrleitung 28 kann ein Rückschlagventil 39 geschaltet sein.

Der Rohwasser- bzw. Feedeingang 13 ist über ein Ventil 36 mit einem Rohwasser- bzw. Feedausgang 37 verbunden. Das Ventil 36 wird beispielsweise elektromagnetisch betrieben.

Der Retentatausgang 14 der Membrantrenneinrichtung 12 ist über eine Retentatabflußleitung 15, die über ein elektromotorisch betriebenes Ventil 30 geleitet wird, mit einem Abfluß verbunden, über den das Retentat 18 die Vorrichtung 10 verläßt. Der Retentatausgang 14 ist über eine Verbindungsleitung 33, in die beispielsweise ein elektromotorisch betriebenes Ventil 34 geschaltet ist, mit einem Ausgang 27 eines Behälters 25 verbunden. Der Behälter 25 dient der Aufnahme wenigstens eines Teils des mit der Vorrichtung 10 erzeugten Permeats 19, das das von der Vorrichtung 10 erzeugte Reinwasser bzw. Trinkwasser bildet.

Der Permeatausgang 16 der Membrantrenneinrichtung 12 ist über Zwischenschaltung eines elektromotorisch betriebenen Ventils 38 mit einem Permeatauslaß 35 verbunden, über den das mit der Vorrichtung 10 erzeugte Permeat als Brauch- bzw. Reinwasser die Vorrichtung 10 verläßt und an geeignet angeschlossene Verbraucher liefert. Der Permeatausgang 16 ist in Fließrichtung des Permeats 18 vor dem Ventil 38 über ein elektromotorisch betriebenes Ventil 31 mit dem Eingang 26 des Behälters 25 verbunden.

Wie aus Fig. 1 ersichtlich sind, sind verschiedene, mit Bezugsziffern nicht bezeichnete Probeentnahmestellen mit den verschiedenen Leitungen verbunden, um Kontrollmessungen des Feeds bzw. Rohwassers 11, des Retentats 18 und des Permeats 19 durchführen zu können.

Eine weitere wesentliche Komponente der Vorrichtung 10 ist die Photovoltaikeinrichtung 23, die im wesentlichen aus an sich bekannten Sonnenkollektoren besteht, die geeignet zusammengeschaltet immer dann eine Gleichschaltung liefern, wenn die auf die Sonnenkollektoren einfallende Strahlungsenergie der Sonne ausreichend groß ist. Die Photovoltaikeinrichtung 23 ist mit einer Steuer- und Regeleinrichtung 32 verbunden, in der, ggf. rechner- bzw. mikroprozessorgesteuert, die von der Photovoltaik gelieferte Spannung geregelt und ggf. geeignet in der Höhe gewandelt auf die durch einen Elektromotor angetriebene Pumpe 24 geliefert wird, mit der die Druckdifferenz zwischen Feed- bzw. Retentatseite 21 und der Permeatseite 20 der Membrantrenneinrichtung 12 aufgebaut wird.

In Form einer gestrichelten Linie ist ein Spannungsversorgungs- und Regel- und Steuerbus dargestellt, wobei der Bus die Ventile 30, 31, 34, 36 und 38 miteinander verbindet. In den Bus integriert ist auch der die Pumpe 24 antreibende Elektromotor. Da derartige Steuer- und Regelsequenzen zum Betrieb der einzelnen Ventile an sich bekannt sind, ist ein weiteres Eingehen auf die Verknüpfung der vorgenannten einzelnen Elemente der Vorrichtung 10 über die Busleitung 40 nicht nötig.

Zum Betrieb der Vorrichtung 10 wird Rohwasser (Feed) 11 auf die Pumpe 24 gegeben. Von dort wird das Rohwasser bzw. Feed 11 über die Feedzufuhrleitung 28 auf den Rohwasser- bzw. Feedeingang 13 gegeben. Die nach dem Prinzip der Ultrafiltration betriebene Membrantrenneinrichtung 12 trennt aufgrund der Druckdifferenz zwischen Feed- bzw. Retentatseite 21 der Membran 20 und der Permeatseite 22 der Membran 20 das Rohwasser bzw. Feed 11 in ein Permeat 19, das die Membrantrenneinrichtung 12 am Permeatausgang 16 verläßt, und in ein Retentat 18, das die Membrantrenneinrichtung 12 am Retentatausgang 14 verläßt. Das Retentat 18 wird aus der Vorrichtung 10 über die Retentatabflußleitung 15 über das Ventil 13 abgeführt und ggf. erneut in den Kreislauf der Vorrichtung 10 geführt oder aber zu anderen Zwecken als Rohwasser verwendet, beispielsweise zur Bewässerung, wo eine Belastung mit Mikroorganismen unkritisch ist.

Das Permeat 19 wird über eine Permeatabflußleitung unter Zwischenschaltung des Ventils 38 abgeführt und verläßt die Vorrichtung 10 als Brauch- bzw. Trinkwasser am Permeatauslaß 35. Während des Betriebes der Vorrichtung 10 wird ein Teil des Permeats 19, entweder auf einmal oder in Form eines Teilstroms über die Leitung 17 unter Zwischenschaltung des Ventils 31 auf den Behältereingang 26 in den Behälter 25 gegeben, der barometrisch höher als die Membrantrenneinrichtung 12 angeordnet ist. Der Behälter 25 wird bis zu einem vorbestimmten Pegel mit Permeat 19 gefüllt.

Da die Vorrichtung 10 nur dann arbeiten kann, wenn Sonnenenergie auf die Photovoltaikeinrichtung 23 fällt, d.h. nur tagsüber, wird der Betrieb der Vorrichtung 10 normalerweise automatisch beendet. Um während des Nichtbetriebes der Vorrichtung 10 während der Nachtzeit eine Belagbildung von Biomaterialien oder sonstigen Verunreinigungen auf der Feed- bzw. Retentatseite 21 der Membran 20 zu verhindern, wird über den Behälterausgang 27 über das Ventil 34 Permeat 19 auf den Retentatausgang 14 gegeben und somit auf die Feed- bzw. Retentatseite 21 der Membran 20. Durch diese Maßnahme in der Nachtzeit wird somit die Membran 20 fortwährend bewässert, so daß die sich ggf. im Permeatraum der Membrantrenneinrichtung 12 befindliche Luft keinen schädigenden Einfluß auf die Membran 20 ausüben kann. Das über die Verbindungsleitung 33 auf die Membrantrenneinrichtung 12 gegebene Spülwasser, das Trinkwasser bzw. Permeat 19 ist, verläßt dann die Membrantrenneinrichtung 12 über den Rohwasser- bzw. Feedeingang 13 und wird über das Ventil 36, das in diesem Falle geeignet gesteuert geöffnet ist, auf den Rohwasser- bzw. Feedausgang aus der Vorrichtung 10 herausgeführt und kann als Bewässerungswasser und dgl. verwendet werden.

Während der Nachtzeit kann dieser vorbeschriebene Spülvorgang selbständig über die Ventile 34 und 36 geeignet gesteuert durchgeführt werden. Zu diesem Zwecke ist es sinnvoll - aber nicht zwingend notwendig - auch eine Akkumulatoreinrichtung (nicht dargestellt) als Pufferenergiequelle vorzusehen, die tagsüber ihre Ladeenergie ebenfalls aus der Photovoltaikeinrichtung 23 bezieht. Durch die Pufferakkumulatoreinrichtung kann sichergestellt sein, daß auch während der Nachtzeit nicht nur eine Steuerung der Ventile 34 und 36 für den Spülvorgang erfolgt, sondern auch eine dosierte Regelung der Menge des Spülpermeats 19. Da der Behälter 25 barometrisch höher als die Membrantrenneinrichtung 12 angeordnet ist, wird für den Spülvorgang selbst keine Energie benötigt, da das im Behälter 25 gesammelte Permeat 19 aufgrund der Wirkung der Gravitation selbständig in die Membrantrenneinrichtung 12 fließt, wenn das Ventil 34 geöffnet wird.

Figur 2 zeigt eine der Membrantrenneinrichtung 12 vorgeschaltete zweite Membrantrenneinrichtung 29, die beispielsweise nach dem Prinzip der Mikrofiltration betrieben wird. Mit dieser zweiten Membrantrenneinrichtung 29 wird eine Vorfiltration betrieben, bei der schon bis zu 99 % der Mikroorganismen und Trübstoffe abgetrennt werden können. Da alle übrigen Elemente der Vorrichtung 10 auch bei der Ausgestaltung der Vorrichtung 10 gem. Fig. 2 im wesentlichen unverändert bleiben und somit auch die Vorrichtung 10 gem. Fig. 2 im wesentlichen gleich zur Funktion der Vorrichtung 10 gem. Fig. 1 betrieben wird, ist ein weiteres Eingehen auf die Vorrichtung 10 gem. Fig. 2 nicht erforderlich. Es sei lediglich darauf hingewiesen, daß auch die für den Betrieb der Membrantrenneinrichtung 29 gem. Fig. 2 nötige Energie, d.h. die für den Betrieb der Druckerhöhungseinrichtung beispielsweise in Form einer Pumpe 240, von der Photovoltaikeinrichtung 23 bereitgestellt wird.

### Bezugszeichenliste

- 10: Vorrichtung
- 11: Rohwasser
- 12: Membrantrenneinrichtung (Ultrafiltration)
- 13: Rohwasser- bzw. Feedeingang
- 14: Retentatausgang
- 15: Retentatabflußleitung
- 16: Permeatausgang
- 17: Permeatabflußleitung
- 18: Retentat
- 19: Permeat
- 20: Membran
- 21: Feed- bzw. Retentatseite der Membran
- 22: Permeatseite
- 23: Photovoltaikeinrichtung
- 24: Pumpe
- 240: Pumpe
- 25: Behälter
- 26: Behältereingang
- 27: Behälterausgang
- 28: Feedzufuhrleitung
- 29: Membrantrenneinrichtung (Mikrofiltration)
- 30: Ventil
- 31: Ventil
- 32: Steuer- und Regeleinrichtung
- 33: Verbindungsleitung
- 34: Ventil
- 35: Permeatauslaß
- 36: Ventil
- 37: Rohwasser- bzw. Feedausgang
- 38: Ventil
- 39: Rückschlagventil
- 40: Busleitung

## Patentansprüche

1. Vorrichtung zur Erzeugung von als Trinkwasser geeignetem Brauchwasser aus Rohwasser mittels wenigstens einer Membrantrenneinrichtung, wobei das Rohwasser auf den Eingang der Membrantrenneinrichtung gegeben wird und wobei das Brauchwasser die Membrantrenneinrichtung als Permeat verläßt, **dadurch gekennzeichnet, daß** die Membrantrenneinrichtung (12) nach dem Prinzip der Ultrafiltration betrieben wird und die für den Aufbau der Druckdifferenz zwischen Feed- bzw. Retentatseite (21) und Permeatseite (22) der Membrantrenneinrichtung (12) benötigte Energie durch eine Photovoltaikeinrichtung (23) geliefert wird.

2. Vorrichtung nach Anspruch 1, **dadurch gekennzeichnet, daß** die Druckdifferenz durch Erhöhung des Feeddrucks mittels einer dem Rohwasser - bzw. Feedeingang (13) der Membrantrenneinrichtung (12) vorgeschaltete Pumpe (24) erzeugt wird.

3. Vorrichtung nach einem oder beiden der Ansprüche 1 oder 2, **dadurch gekennzeichnet, daß** der Permeatausgang (16) der Membrantrenneinrichtung (12) mit einem Behälter (25) zur Aufnahme wenigstens eines Teils des erzeugten Permeats (19) verbunden ist.

4. Vorrichtung nach Anspruch 3, **dadurch gekennzeichnet, daß** der Behälter (25) barometrisch höher als die Membrantrenneinrichtung (12) angeordnet ist.

5. Vorrichtung nach einem oder beiden der Ansprüche 3 oder 4, **dadurch gekennzeichnet, daß** der Behälter (25) einen Ausgang (27) aufweist, der mit dem Retentatausgang (14) der Membrantrenneinrichtung (12) verbunden (33) ist.

6. Vorrichtung nach Anspruch 5, **dadurch gekennzeichnet, daß** in die Verbindungsleitung (33) ein Ventil (34) geschaltet ist.

7. Vorrichtung nach einem oder mehreren der Ansprüche 1 bis 6, **dadurch gekennzeichnet, daß** zusätzlich zu der nach dem Prinzip der Ultrafiltration betriebenen Membraneinrichtung (12) eine in die Rohwasser- bzw. Feedzufuhrleitung (28) geschaltete, nach dem Prinzip der Mikrofiltration betriebene zweite Membrantrenneinrichtung (29) vorgesehen ist.

8. Vorrichtung nach einem oder mehreren der Ansprüche 1 bis 6, **dadurch gekennzeichnet, daß** wenigstens die nach dem Prinzip der Ultrafiltration betriebene Membrantrenneinrichtung (12) nach dem Cross-Flow-Modus betrieben wird.

9. Vorrichtung nach einem oder mehreren der Ansprüche 3 bis 8, **dadurch gekennzeichnet, daß** das im Behälter (25) gesammelte Permeat (19) wenigstens teilweise über die Feed- bzw. Retentatseite (21) der Membrantrenneinrichtung (12) geführt wird.

10. Vorrichtung nach einem oder mehreren der Ansprüche 1 bis 9, **dadurch gekennzeichnet, daß** die Höhe der Druckdifferenz zwischen Feed- bzw. Retentatseite (21) und der Permeatseite (22) durch ein in einer Retentatabflußleitung (15) angeordnetes Ventil (30) steuer- und regelbar ist.

11. Vorrichtung nach einem oder mehreren der Ansprüche 3 bis 10, **dadurch gekennzeichnet, daß** in der Permeatabflußleitung (17) zwischen Membrantrenneinrichtung (12) und Behälter (25) ein Ventil (31) angeordnet ist.

12. Vorrichtung nach einem oder mehreren der Ansprüche 1 bis 11, **dadurch gekennzeichnet, daß** in der Permeatabflußleitung (17) zwischen Membrantrenneinrichtung (12) und einem Permeatauslaß (35) ein Ventil (38) angeordnet ist.

13. Vorrichtung nach einem oder mehreren der Ansprüche 1 bis 12, **dadurch gekennzeichnet, daß** der Rohwasser- bzw. Feedeingang (13) der Membraneinrichtung (12) über ein Ventil (36) mit einem Rohwasser- bzw. Feedausgang (37) verbunden ist.

14. Vorrichtung nach einem oder mehreren der Ansprüche 6 bis 13, **dadurch gekennzeichnet, daß** wenigstens die Ventile (30, 31, 34, 36, 38) von einer Steuer- und Regeleinrichtung (32) aus steuer- und regelbar sind.

15. Vorrichtung nach Anspruch 14, **dadurch gekennzeichnet, daß** die für die durch die Steuer- und Regeleinrichtung (32) ausführbare Steuer- und Regelung benötigte Energie von der Photovoltaikeinrichtung (23) geliefert wird.
